(19) Europäisches Patentamt
European Patent Office
Office européen des brevets

(11) **EP 0 644 542 B1**

(12) **EUROPEAN PATENT SPECIFICATION**

(45) Date of publication and mention
of the grant of the patent:
**12.05.1999 Bulletin 1999/19**

(51) Int Cl.⁶: **G11B 20/10**

(21) Application number: **94306889.0**

(22) Date of filing: **21.09.1994**

(54) **Audio signal reproducing apparatus**

Einrichtung zur Wiedergabe von Audiosignalen

Appareil de reproduction de signaux audio

(84) Designated Contracting States:
**DE FR GB**

(30) Priority: **21.09.1993 JP 234633/93**

(43) Date of publication of application:
**22.03.1995 Bulletin 1995/12**

(73) Proprietor: **PIONEER ELECTRONIC
CORPORATION
Meguro-ku Tokyo (JP)**

(72) Inventors:
• **Yamada, Tomoyasu,
c/o Pioneer Tokorozawa Plant
Saitama (JP)**

• **Ooga, Chihaya, c/o Pioneer Tokorozawa Plant
Saitama (JP)**

(74) Representative: **Tomlinson, Kerry John
Frank B. Dehn & Co.,
European Patent Attorneys,
179 Queen Victoria Street
London EC4V 4EL (GB)**

(56) References cited:
**EP-A- 0 497 050**

• **PATENT ABSTRACTS OF JAPAN vol. 015 no.
106 (E-1044) ,13 March 1991 & JP-A-02 311006
(PIONEER ELECTRON CORP) 26 December
1990,**

## Description

The present invention relates to an audio signal reproducing apparatus for reproducing an original audio signal from a PCM (Pulse Code Modulation) digital audio signal obtained by reading out from a recording medium such as a compact disc.

In a recording medium such as compact disc (CD), digital audio tape (DAT), or the like in which a digital audio signal is recorded, a recording frequency of the digital audio signal is a frequency of a band which is equal to or less than the half of a sampling frequency so as not to cause an aliasing distortion by the sampling theorem.

It is generally said that a frequency of a single signal tone (pure tone) which a person can hear is equal to 20 kHz. By this reason, the sampling frequency is determined to be 44.1 kHz in the case of a compact disc and is determined to be 48 kHz in the case of a digital audio tape.

However, in the recent researches, it has been discussed that an unnatural reproduction sound is generated in the case where a high frequency component of an audio signal is cut by using a filter having frequency characteristics in which the response curve steeply falls at 20 kHz, as in the apparatuses designed so far.

To cope with this problem, development of reproducing apparatuses such as a CD player or the like which can reproduce signal components of frequencies which are equal to or higher than half the sampling frequency is being performed. For example, there is proposed an apparatus in which read-out original signal components whose frequencies are equal to or lower than half the sampling frequency are extracted from the digital audio signal obtained by reading out from a recording medium, and harmonics components are produced by squaring (multiplying by itself) or cubing the original signal components by using a multiplier or multipliers and are superimposed on the read original signal components. Such an apparatus is disclosed in Japanese Patent Kokai No. 4-245062 (EP-A-0 497 050).

In this conventional apparatus, low order harmonics components such as secondary harmonics, tertiary harmonics, or the like can be formed by using a small number of multipliers. In order to form high order harmonics components, however, it is necessary to use an arrangement including multi-stage connected multipliers, so that a problem arises that the construction becomes complicated.

It is therefore an object of the invention to provide an audio signal reproducing apparatus which can produce reproduction sounds having naturalness by forming not only low order harmonics components of an original signal but also high order harmonics components by a simple construction and by adding them to the original signal.

According to the present invention, there is provided an audio signal reproducing apparatus for reproducing an original audio signal from a PCM digital audio signal obtained by reading out from a recording medium, wherein the apparatus comprises: an oversampling digital low-pass filter for receiving the PCM digital audio signal, for attenuating components whose frequencies are equal to or higher than substantially
1/2 of a sampling frequency fs of the PCM digital audio signal, and for multiplying the sampling frequency by n times (n is an integer of 2 or more), thereby interpolating a new sampling point; digital multiplying means for multiplying an output audio signal of the low-pass filter; a digital high-pass filter for attenuating output audio signal components of the multiplying means whose frequencies are equal to or lower than substantially 1/2 of the sampling frequency fs; and adding means for adding the output audio signal of the low-pass filter and an output audio signal of the high-pass filter and outputing an obtained addition signal as a reproduction signal of the original audio signal, characterized in that the digital multiplying means multiplies the output audio signal of the oversampling digital low-pass filter by a signal including the absolute value component of the output audio signal.

In the audio signal reproducing apparatus of the invention, only the read original signal components whose frequencies are equal to or lower than the frequency of 1/2 of the sampling frequency fs of the digital audio signal obtained by reading out from the recording medium are extracted by the oversampling digital low-pass filter, the harmonics components are formed by multiplying the output audio signal of the oversampling digital low-pass filter and the signal including the absolute value component, and the harmonics components whose frequencies are equal to or higher than fs/2 in the harmonics components are extracted and superimposed on the read original signal component.

A number of preferred embodiments of the present invention will now be described by way of example only and with reference to the accompanying drawings, in which:-

Fig. 1 is a block diagram showing an embodiment of an audio signal reproducing apparatus according to the invention;
Fig. 2 is a waveform diagram showing the operation of each section in the apparatus of Fig. 1;
Fig. 3 is a diagram showing an example of an output signal waveform of a conventional apparatus;
Fig. 4 is a diagram showing an example of an output signal waveform of the apparatus in Fig. 1;
Fig. 5 is a block diagram showing another embodiment of an audio signal reproducing apparatus according to the invention;
Fig. 6 is a block diagram showing a practical construction of a harmonics component detecting circuit in the apparatus in Fig. 5; and

Fig. 7 is a waveform diagram showing the operation of each section of the harmonics component detecting circuit.

An embodiment of the invention will be described in detail hereinbelow with reference to the drawings.

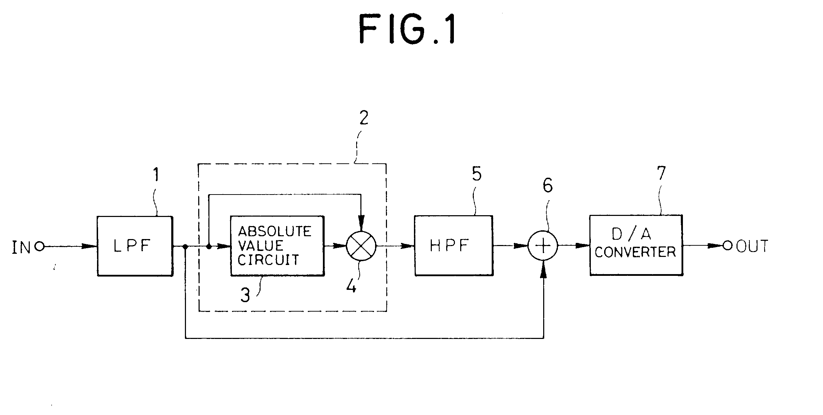

In an audio signal reproducing apparatus according to the invention shown in Fig. 1, a PCM digital audio signal read out from a recording medium such as a compact disc or the like is supplied to an input terminal IN. In case of a compact disc, a digital audio signal is read out from the compact disc by a pickup (not shown) and, after that, it is EFM (Eight to Fourteen Modulation) demodulated and error corrected, and the resultant digital audio signal is supplied. An LPF 1 is connected to the input terminal IN. The LPF 1 is an 8-times oversampling digital LPF which is used in an ordinary CD player and has characteristics which steeply attenuate at a frequency that is equal to or higher than 1/2 of a sampling frequency fs of an input signal. A harmonics generating circuit 2 is connected to an output of the LPF 1.

The harmonics generating circuit 2 is constructed by an absolute value circuit 3 and a multiplier 4. The absolute value circuit 3 obtains the absolute value of the output value of the LPF 1. The multiplier 4 multiplies the output value of the LPF 1 and an output value of the absolute value circuit 3. An output value of the multiplier 4 is a produced harmonics component.

In the case where the input data is expressed by the absolute value, the MSB (most significant bit) of the data shows a positive or negative code. The absolute value circuit 3, therefore, keeps the data as it is when the MSB is equal to 0 indicative of positive. When the MSB is equal to 1 indicative of negative, the data is converted into 0 and is generated. In the case where the data is expressed by a complementary number of 2, the data is generated as it is so long as the MSB is equal to 0 indicative of positive. When the MSB is equal to 1 indicative of negative, 1 is subtracted from the data and, further, 01 of each bit is inverted, and the resultant data is generated.

A digital HPF 5 to cut frequency components of fs/2 or lower is connected to an output of the harmonics generating circuit 2. An adder 6 is connected to both of the output of the LPF 1 and an output of the HPF 5, thereby adding the output values of the LPF 1 and HPF 5. A D/A converter 7 is connected to an output of the adder 6. The D/A converter 7 converts the digital audio signal from the adder 6 into the analog signal and operates at a frequency 8fs which is eight times the sampling frequency fs of the input signal. An output signal of the D/A converter 7 is supplied to an output terminal OUT.

In the above construction, the PCM digital audio signal of the sampling frequency fs read out from the recording medium is first processed by interpolation of data into the sampled data to give a signal having an apparent sampling frequency of eight times the sampling frequency fs, namely, 8fs by the LPF 1 and the components of 1/2 or higher of the frequency fs of the digital audio signal are cut. In the case where the sampling frequency is raised to 8fs as mentioned above, harmonics components in a frequency range from fs/2 to 4fs can be produced by the harmonics generating circuit 2 of the present invention. By supplying the digital audio signal of the sampling frequency 8fs which is generated from the LPF 1 to the harmonics generating circuit 2, the harmonics components are formed.

In the harmonics generating circuit 2, assuming that the value of the digital audio signal generated from the LPF 1 is set to x, since the absolute value circuit 3 generates the absolute value |x| of x, the multiplier 4 multiplies the digital audio signal value x and the absolute value |x|, thereby generating an output value x•|x|. Now assuming that x = sinωt, the output value of the multiplier 4 is as follows by the Fourier expansion.

$$\sin \omega t\, |\sin \omega t|$$

$$= \sin \omega t\, \{\frac{2}{\pi} - \frac{4}{\pi}\, (\frac{\cos 2\omega t}{1\cdot 3} + \frac{\cos 4\omega t}{3\cdot 5} + \frac{\cos 6\omega t}{5\cdot 7} + ...... )\}$$

$$= \frac{2}{\pi}\sin\omega t - \frac{4}{\pi}\, (\frac{1}{3}\, \sin\omega t \cos 2\omega t + \frac{1}{15}\sin\omega t \cos 4\omega t$$

$$+ \frac{1}{35}\sin\omega t \cos 6\omega t + ... )$$

$$= \frac{2}{\pi}\, \sin\omega t - \frac{4}{\pi}\, \{-\frac{1}{6}\, \sin\omega t + (\frac{1}{6} - \frac{1}{30})\, \sin 3\omega t + (\frac{1}{30} - \frac{1}{70}\, \sin 5\omega t + ... \}$$

$$= \frac{8}{3\pi}\sin\omega t - \frac{8}{15\pi}\, \sin 3\omega t - \frac{8}{105\pi}\sin 5\omega t - ...... \qquad (1)$$

thereby forming odd number harmonics components.

The digital audio signal including those harmonics components generated from the multiplier 4 includes the harmonics components in a frequency which is equal to or lower than fs/2. When those harmonics components are added by the adder 6, such an adding process results in an overlap addition. The signal generated from the multiplier 4 is, therefore, supplied to the HPF 5 and the frequency components of fs/2 or lower are cut.

The signal generated from the HPF 5 is added to the signal generated from the LPF 1 by the adder 6. That is, the read-out original signal components from the LPF 1 and the harmonics components from the HPF 5 are added and the resultant addition output is generated as an original audio signal.

The signal generated from the adder 6 is supplied to the D/A converter 7 and is converted into the analog audio signal. The analog audio signal, therefore, includes the harmonics components of fs/2 or higher which are not included in the original signal read out from the recording medium.

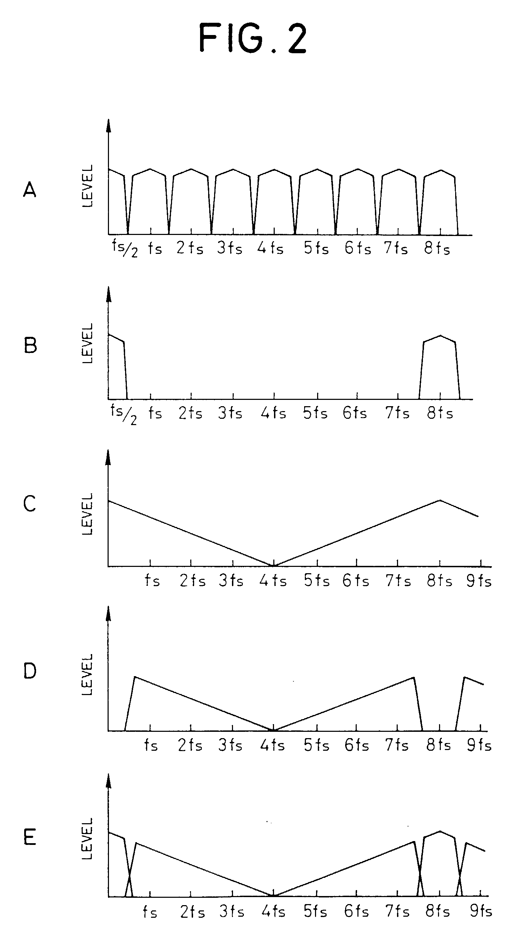

An example of a frequency spectrum waveform expressed by the digital signal which is obtained in each section in the apparatus is shown. In the case where the PCM digital audio signal read out from the recording medium has, for example, a component of each band as shown in a portion A in Fig. 2, aliasing components of 0.5 fs to 7.5 fs are eliminated from the signal generated from the LPF 1 by the oversampling operation of eight times as shown in a portion B in Fig. 2. Subsequently, a digital audio signal including the harmonics components is produced by the harmonics generating circuit 2, so that mirror components around a frequency of 4fs as a center occur as shown in a portion C in Fig. 2. Since unnecessary portions of fs/2 or lower of the output signal of the harmonics generating circuit 2 are eliminated by the HPF 5, the frequency spectrum of the output signal of the HPF 5 becomes as shown in portion D in Fig. 2. Further, the signal outputted by the adder 6 includes the output signals of the HPF 5 and LPF 1, and its frequency spectrum becomes as shown in a portion E in Fig. 2.

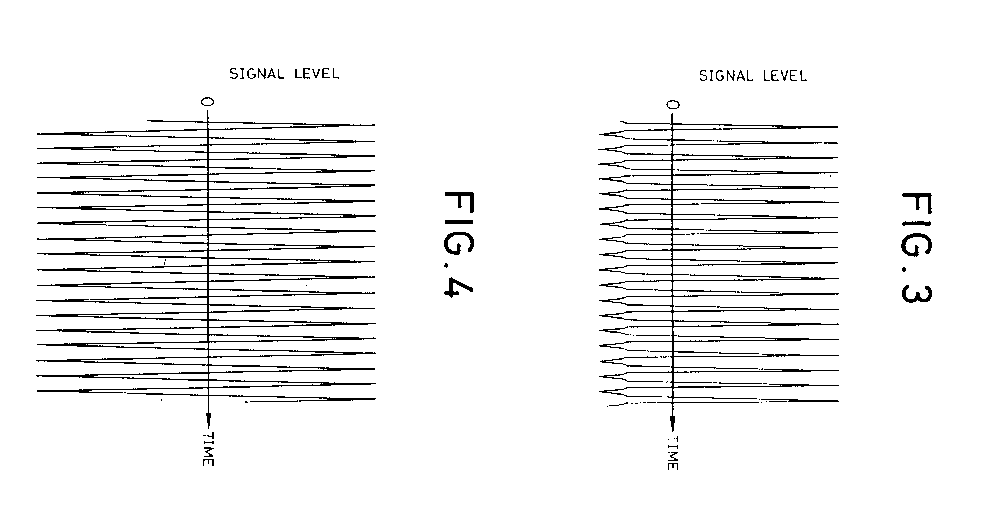

In case of producing the low order harmonics components such as $x^2 + x^3$, an output signal waveform becomes as shown in Fig. 3 so long as the input signal is a sine wave. For instance, for the input of sampling data of a sine wave of 12.5 kHz, secondary harmonics components of 25 kHz and tertiary harmonics components of 37.5 kHz are generated. The upper and lower shapes of the output signal waveform, however, are not symmetrical. In case of a sound such as a sound of a pipe organ whose fundamental tone is set to 10 kHz, the secondary harmonics components or more which are higher than 20 kHz in the output signal waveform are cut, so that it is undesirable. According to the invention, on the other hand, in case of generating x•IxI as harmonics components, since not only the secondary and tertiary harmonics components but also higher order harmonics components are produced, the upper and lower shapes of the output signal waveform are symmetrical as shown in Fig. 4, so that a desirable reproduction sound is obtained.

In the above embodiment, it is necessary to ensure that an overflow or underflow does not occur during the calculation process such as the addition process or the like.

In the foregoing embodiment, for the input signal value x, the harmonics generating circuit 2 multiplies its absolute value IxI. For the input signal value x, however, the square root of its absolute value

$$\sqrt{|x|} \qquad\qquad (2)$$

can be also multiplied. In this case, the level of the produced harmonics components of fs/2 or higher is smaller than that in case of x•IxI, however, the user can also select which one of the multiplication results is used on the basis of an auditory sense.

In the above embodiment, the HPF has been used in order to eliminate the components whose frequencies are equal to or lower than 1/2 of the sampling frequency fs in the harmonics components generated from the harmonics generating circuit 2. It is, however, sufficient to use a BPF (band pass filter) whose pass band is almost equal to or higher than 1/2 of the sampling frequency fs and is equal to or lower than 4fs in the case where the input PCM digital audio signal is processed to the signal of the sampling frequency of eight times, namely, 8fs by the oversampling digital LPF as shown in the above embodiment.

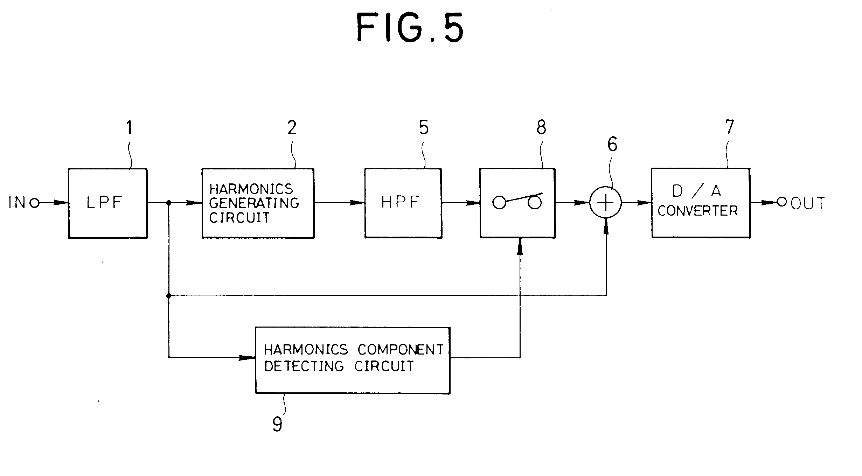

Fig. 5 shows another embodiment of the invention. In the embodiment, an on/off switch 8 and a harmonics component detecting circuit 9 are provided in addition to the LPF 1, harmonics generating circuit 2, HPF 5, adder 6, and D/A converter 7 of the apparatus shown in Fig. 1. The switch 8 is inserted between the HPF 5 and adder 6. The harmonics component detecting circuit 9 discriminates whether the output signal of the LPF 1 is a signal having harmonics components or not and controls the on/off operation of the switch 8 in accordance with the result of the discrimination.

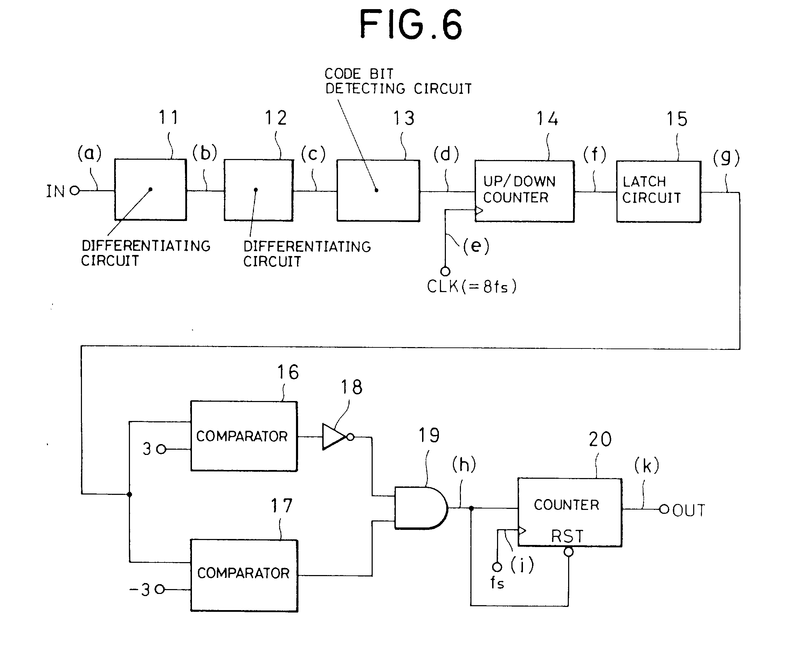

In the harmonics component detecting circuit 9, as shown in Fig. 6, two differentiating circuits 11 and 12 are serially connected to the input terminal IN of the digital signal from the LPF 1. The differentiating circuits 11 and 12 secondary differentiate input digital signals. A code bit detecting circuit 13 is connected to an output of the differentiating circuit 12. The code bit detecting circuit 13 judges whether the data is positive or negative from the MSB of the digital signal data. When the MSB is equal to 0 indicative of positive, the detecting circuit 13 generates a high level signal indicative of 1. When the MSB is equal to 1 indicative of negative, the circuit 13 generates a low level signal indicative of 0. An output signal of the code bit detecting circuit 13 is supplied to an up/down counter 14. The up/down counter 14 is reset in response to the leading edge of the high level signal from the code bit detecting circuit 13 and counts up the number of clock pulses CLK while the high level signal is supplied. The counter 14 counts down the number of clock pulses CLK while the low level signal is supplied. A frequency of the clock pulse CLK is, for example, eight times as high as the sampling frequency fs.

A latch circuit 15 for holding a count output of the up/down counter 14 is connected to an output thereof. A numerical value which was finally increased in a period of time of 1 from the leading edge to the next leading edge of the output signal of the code bit detecting circuit 13 is held by a latch circuit 15 during the next period of time. An output signal of the latch circuit 15 is supplied to comparators 16 and 17. The comparators 16 and 17 construct a window comparator together with an invertor 18 and an AND circuit 19. That is, when an output value of the latch circuit 15 lies within a range which is larger than -3 and is smaller than 3, each of the comparators 16 and 17 generates a high level signal indicative of 1. Each comparator generates a low level signal indicative of 0 when the output value is out of such a range. A counter 20 is connected to the AND circuit 19 as an output of the window comparator. The counter 20 is reset by a low level output of the window comparator and counts the number of pulses of the frequency fs when the window comparator generates the high level output. The counter 20 generates a switch-off signal when the count value reaches 44100 corresponding to one second.

In the above construction, odd number harmonics components are formed by the harmonics generating circuit 2 on the basis of the digital audio signal of the sampling frequency 8fs that is generated from the LPF 1 and the frequency components whose frequencies are equal to or lower than fs/2 in the harmonics components are cut by the HPF 5 in a manner similar to the apparatus in Fig. 1.

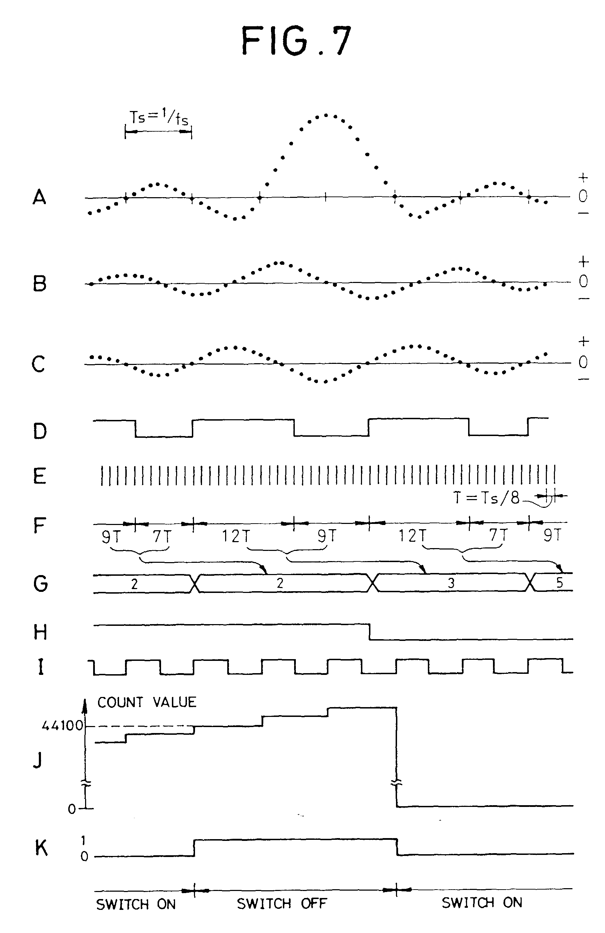

In the case where the digital signal data generated from the LPF 1 is changed as shown in a portion A in Fig. 7, the digital signal data is primary differentiated by the differentiating circuit 11. The resultant primary differentiated data becomes as shown in a portion B in Fig. 7. The primary differentiated data is further secondary differentiated by the differentiating circuit 12, so that the resultant data becomes as shown in a portion C in Fig. 7. Namely, so long as the digital signal data generated from the LPF 1 is a single sine wave, the result of the secondary differentiation also becomes a single sine wave. When a triangular wave component or rectangular wave component is secondary differentiated, however, the resultant data doesn't become a signal sine wave but becomes an impulse or component that doesn't change with the elapse of time, so that it will be understood that the digital signal data generated from the LPF 1 is not a single sine wave.

The data generated from the differentiating circuit 12 is supplied to the code bit detecting circuit 13. As shown in a portion D in Fig. 7, a high level signal is sent to the up/down counter 14 so long as the MSB of the data is equal to 0 and a low level signal is supplied to the up/down counter 14 so long as the MSB is equal to 1. When the output level of the code bit detecting circuit 13 is high, the up/down counter 14 counts up the number of clock pulses (a portion E in Fig. 7). When the output level is low, the counter 14 counts down the number of clock pulses. Assuming that a frequency of the clock pulse is set to T, therefore, count values indicative of time durations as shown in a portion F in Fig. 7 are derived. In the latch circuit 15, in response to the leading edge of the output signal of the code bit detecting circuit 13, the count value of the up/down counter 14 just before the leading edge is held and generated for a period of time until the next leading edge. In case of the count values shown in the portion F in Fig. 7, the output value of the latch circuit 15 becomes as shown in a portion G in Fig. 7.

When the output value of the latch circuit 15 lies within a predetermined window width (-3 < output value < +3), an output signal of the AND circuit 19 is set to the high level as shown in a portion H in Fig. 7. The output signal of the AND circuit 19 is set to the low level, however, when the output value of the latch circuit 15 is out of the predetermined window width. When the output signal of the AND circuit 19 is at the high level, the counter 20 counts the number of pulses (a portion I in Fig. 7) of the frequency fs. When a count value of the counter 20 reaches 44100 as shown in a portion J in Fig. 7, an output level of the counter 20 is set to the high level as shown in a portion K in Fig. 7. The high level of the counter 20 is maintained, even after the output signal of the AND circuit 19 has dropped to the low level, until the leading edge of the pulse frequency fs appears, and this high level output is supplied to the on/off switch 8 as a switch-off signal. The on/off switch is held in the off state only for a period of time when the switch-off signal is supplied.

The signal generated from the HPF 5 is added to the signal generated from the LPF 1 by the adder 6 for a period of time of the on-state of the on/off switch 8, so that an original audio signal is derived as an output signal obtained by adding the read-out original signal components and the harmonics components. For a period of time of the off-state of the on/off switch 8, on the other hand, only the signal generated from the LPF 1 becomes an output signal of the adder 6, so that the harmonics components produced by the harmonics generating circuit 2 are not added. That is, for a period of time that the PCM digital audio signal read out from the recording medium includes a single sine wave, it is unnecessary to particularly add harmonics, so that the components whose frequencies are equal to or lower than the frequency of fs/2 of the digital audio signal of 8fs as an output signal of the LPF 1 are directly generated as an original audio signal. When components whose frequencies are equal to or higher than fs/2 of the original sound are predicted, the produced harmonics components are not added so long as the produced harmonics components inherently should not exist.

In the audio signal reproducing apparatus as mentioned above, only the read-out original signal components whose frequencies are equal to or lower than 1/2 of the sampling frequency fs of the PCM digital audio signal obtained by reading out from the recording medium are extracted by the oversampling digital low-pass filter, the harmonics components are formed by multiplying the output audio signal of the oversampling digital low-pass filter and a signal including its absolute value component, and the harmonics components whose frequencies are equal to or higher than fs/2 in the harmonics components are extracted and superimposed on the original signal component. No influence is, therefore, exerted on the read-out original signal components whose frequencies are equal to or lower than 1/2 of the sampling frequency fs of the digital audio signal read out from the recording medium. It is also possible to produce the harmonics components from the low order to high order harmonics components of the read-out original signal by a simple construction and at low costs. Since the signal components cut by the filter having steep characteristics at the time of the recording onto the recording medium can be reproduced, consequently, reproduction sounds having naturalness can be obtained.

## Claims

1. An audio signal reproducing apparatus for reproducing an original audio signal from a PCM digital audio signal obtained by reading out from a recording medium, comprising:

   an oversampling digital low-pass filter (1) for receiving said PCM digital audio signal, for attenuating components whose frequencies are equal to or higher than substantially 1/2 of a sampling frequency of said PCM digital audio signal, and for increasing the sampling frequency by n times (n is an integer of 2 or more), thereby interpolating a new sampling point;
   digital multiplying means (4) for multiplying an output audio signal of said oversampling digital low-pass filter;
   a digital high-pass filter (5) for attenuating output audio signal components of said multiplying means whose frequencies are equal to or lower than substantially 1/2 of said sampling frequency; and
   adding means (6) for adding the output audio signal of said low-pass filter (1) and an output audio signal of said high-pass filter (5) and outputting an obtained addition signal as a reproduction signal of said original audio signal, characterised in that said digital multiplying means (4) multiplies the output audio signal of said oversampling digital low-pass filter (1) by a signal including the absolute value component of said output audio signal.

2. The apparatus claimed in claim 1, further comprising harmonics component detecting means (9) connected to said oversampling digital low-pass filter (1) for producing a switch control signal based on harmonics components contained in said output audio signal, and a switch (8) interposed between said digital high-pass filter (1) and adding means (6), for interrupting the transmission of said output audio signal of said high-pass filter in accordance with a state of said switch control signal.

## Patentansprüche

1. Audiosignal-Wiedergabeeinrichtung zur Wiedergabe von originären Audiosignalen aus einem digitalen PCM-Audiosignal, welches durch Auslesen eines Aufzeichnungsmediums erhalten wird, und welches umfaßt:

   ein digitales Überabtast-Tiefpaßfilter (1) zum Empfangen des digitalen PCM-Audiosignals, um Komponenten abzuschwächen, deren Frequenzen gleich oder höher sind als ungefähr 1/2 mal die Abtastfrequenz des digitalen PCM-Audiosignals und um die Abtastfrequenz um einen Faktor n zu erhöhen (wobei n eine ganze Zahl größer oder gleich 2 ist), wodurch ein neuer Abtastpunkt interpoliert wird;

   digitale Vervielfältigungsmittel (4) zum Vervielfältigen eines Ausgabeaudiosignals des digitalen Überabtast-Tiefpaßfilters;

   ein digitales Hochpaßfilter (5) zum Abschwächen der Ausgabekomponenten des Audiosignals der Vervielfältigungsmittel, deren Frequenzen kleiner oder gleich sind als ungefähr 1/2 mal die Abtastfrequenz; und

   Addiermittel (6) zum additiven Verknüpfen des Ausgabeaudiosignals des Tiefpaßfilters (1) uiid eines Ausgabeaudiosignals des Hochpaßfilters (5) und zum Ausgeben eines vorab erhaltenen Additionssignals als Wiedergabesignal des originären Audiosignals,

   **dadurch gekennzeichnet,**

## EP 0 644 542 B1

daß in den digitalen Vervielfältigungsmitteln (4) das Ausgabeaudiosignal des Überabtastdigital-Tiefpaßfilters (1) mit einem Signal multipliziert wird, welches die dem absoluten Wert des Ausgabeaudiosignals entsprechende Komponente umfaßt.

2. Einrichtung nach Anspruch 1, welche weiterhin Oberwellenerfassungsmittel (9) umfaßt, die mit dem digitalen Überabtast-Tiefpaßfilter (1) verbunden sind, um ein Schaltsteuersignal basierend auf Oberschwingungskomponenten zu erzeugen, welche in dem Ausgabeaudiosignal enthalten sind, und einen Schalter (8), welcher zwischen dem digitalen Hochpaßfilter (1) sowie den Addiermitteln (6) angebracht ist, um die Übertragung des Ausgabeaudiosignals auf den Hochpaßfilter in Übereinstimmung mit dem Zustand des Schaltsteuersignals zu unterbrechen.

### Revendications

1. Appareil de reproduction de signaux audio servant à reproduire un signal audio original à partir d'un signal audio numérique MIC obtenu par lecture d'un support d'enregistrement, comprenant :

un filtre passe-bas numérique de suréchantillonnage (1) pour recevoir ledit signal audio numérique MIC, pour atténuer les composantes dont les fréquences sont égales ou supérieures à essentiellement la moitié d'une fréquence d'échantillonnage dudit signal audio numérique MIC, et pour augmenter la fréquence d'échantillonnage de n fois ( n est un nombre entier supérieur ou égal à 2), ce qui permet l'interpolation d'un nouveau point d'échantillonnage ;
des moyens multiplicateurs numériques (4) pour multiplier un signal audio de sortie dudit filtre passe-bas numérique de suréchantillonnage;
un filtre passe-haut numérique (5) pour atténuer les composantes du signal audio de sorties desdits moyens multiplicateurs dont les fréquences sont égales ou inférieures à essentiellement la moitié de ladite fréquence d'échantillonnage ; et
des moyens additionneurs (6) pour additionner le signal audio de sortie dudit filtre passe-bas (1) et un signal audio de sortie dudit filtre passe-haut (5), et émettre un signal d'addition obtenu en tant que signal de reproduction dudit signal audio original, caractérisé en ce que lesdits moyens multiplicateurs numériques (4) multiplient le signal audio de sortie dudit filtre passe-bas numérique de suréchantillonnage (1) par un signal de sortie audio.

2. Appareil selon la revendication 1, comprenant en outre des moyens de détection de composantes harmoniques (9) connectés audit filtre passe-bas numérique de suréchantillonnage (1) pour produire un signal de commande de commutateur en fonction des composantes harmoniques contenues dans ledit signal audio de sortie, et un commutateur (8) intercalé entre ledit filtre passe-haut numérique (1) et les moyens additionneurs (6), pour interrompre la transmission dudit signal audio de sortie dudit filtre passe-haut en fonction d'un état dudit signal de commande de commutateur.

# FIG.1

# FIG.2

# FIG.3

# FIG.4

# FIG.5

# FIG.6

CODE BIT
DETECTING CIRCUIT

IN —○—(a)— [11 DIFFERENTIATING CIRCUIT] —(b)— [12 DIFFERENTIATING CIRCUIT] —(c)— [13] —(d)— [14 UP/DOWN COUNTER] —(f)— [15 LATCH CIRCUIT] —(g)

(e) CLK(=8fs)

[16 COMPARATOR] — 3○ — ▷ 18

[17 COMPARATOR] — -3○

19 —(h)— [20 COUNTER / RST] —(k)— ○OUT

(i) fs

EP 0 644 542 B1

# FIG.7